Europäisches Patentamt

European Patent Office

Office européen des brevets

(11) Publication number: **0 365 206 B1**

# EUROPEAN PATENT SPECIFICATION

(45) Date of publication of patent specification: **14.09.94**   (51) Int. Cl.5: **C07F 7/08**, C07F 7/12

(21) Application number: **89310408.3**

(22) Date of filing: **11.10.89**

(54) Alkylation of halodisilanes.

(30) Priority: **17.10.88 US 258949**

(43) Date of publication of application:
**25.04.90 Bulletin  90/17**

(45) Publication of the grant of the patent:
**14.09.94 Bulletin  94/37**

(84) Designated Contracting States:
**BE DE ES FR GB**

(56) References cited:
**FR-A- 1 023 244
FR-A- 2 163 579
US-A- 2 403 370
US-A- 4 059 607
US-A- 4 602 101**

(73) Proprietor: **DOW CORNING CORPORATION
3901 S. Saginaw Road
Midland Michigan 48686-0994 (US)**

(72) Inventor: **Halm, Roland Lee
507 Brentwood Drive
Madison Indiana (US)**
Inventor: **Keyes, Brian Robert
1541 Oak Ridge Drive
Ogden Utah (US)**
Inventor: **Chadwick, Kirk Michael
Box 492H, R No. 2
Hanover Indiana (US)**

(74) Representative: **Laredo, Jack Joseph
Elkington and Fife
Prospect House
8 Pembroke Road
Sevenoaks, Kent TN13 1XR (GB)**

**Description**

The objective of the instant invention is providing a process for the preparation of more highly alkylated organosilanes and organodisilanes from the reaction of halodisilanes with an alkyl halide in the presence of a halogen-accepting metal.

US-A-2 403 370 (D. T. HURD) describes a method of increasing the alkyl content of halogenosilanes by substituting lower alkyl groups for at least some of the halogen atoms in a halogenosilane containing at least two silicon-bonded halogen atoms and at least one silicon-bonded monovalent hydrocarbon radical, in which a gaseous mixture of a lower alkyl halide and an alkylhalogenosilane containing at least two halogen atoms connected to silicon is contacted with aluminium or zinc.

Halodisilanes can be alkylated to more highly alkylated organodisilanes, and a significant portion of the halodisilanes are converted to usable organosilanes. However, the present inventors have found that the alkylation of halodisilanes can be significantly improved by the addition of a catalyst.

The instant invention provides for a process for the alkylation of halodisilanes to produce more highly alkylated silicon compounds. What is described, therefore, is a process for preparing more highly alkylated silicon compounds having the formula, $R_aR^i{}_bSiX_{(4-a-b)}$ or $R_fR^i{}_gSi_2X_{(6-f-g)}$, wherein each R is independently selected from a group consisting of methyl, ethyl and $\underline{n}$-propyl; each $R^i$ is independently selected from a group consisting of hydrogen atoms, alkyl, substituted alkyl, alkenyl, aryl and alkaryl groups; $\underline{a}$ has a value of 1, 2, 3 or 4, $\underline{b}$ has a value of 0, 1, 2 or 3 and the sum of $\underline{a}$ + $\underline{b}$ is 4 or less; $\underline{f}$ has a value of 1, 2, 3, 4, 5 or 6, $\underline{g}$ has a value of 0, 1, 2, 3, 4 or 5 and the sum of $\underline{f}$ + $\underline{g}$ is 6 or less; and X is an independently selected halogen atom, said process comprising:

(A) contacting an halodisilane having the formula $R^i{}_eX_{6-e}Si_2$ or a mixture thereof, wherein $R^i$ and X are defined above; and $\underline{e}$ has a value of 0, 1, 2, 3, 4 or 5, with an alkyl halide having the formula, RX, wherein R and X are defined above, in the presence of a metal which serves as a halogen acceptor;

(B) reacting the halodisilane or mixture thereof with the alkyl halide in the presence of the metal at a temperature greater than about 150°C to form the more highly alkylated silicon compounds and a halide of the metal; and

(C) isolating and separating the more highly alkylated silane,

wherein the metal which serves as an halogen acceptor is selected from the group consisting of aluminum and zinc, and

wherein said steps (A) and (B) are carried out in the presence of a catalyst selected from the group consisting of tin and tin compounds, antimony and antimony compounds, magnesium and magnesium compounds, mercury and mercury compounds, aluminum bromide, iron halides, boron, phosphorous, metal phosphorous alloys, metal phosphides, palladium iodine, hydrogen halides and mixtures thereof.

The process for alkylating halodisilanes comprises reacting the halodisilane with the alkyl halide in the presence of a metal which serves as an halogen acceptor in the presence of a sufficient quantity of a catalyst effective in improving exchange of said R groups from the alkyl halide with said halogen atoms X of said halodisilane to yield said more highly alkylated silicon compounds.

The metal which serves as an halogen acceptor is selected from the group consisting of aluminum and zinc. The most preferred metal is aluminum. The metal can be in the physical form, for example, of powders, wire, flake, granules and chunks. It is preferred that the form of the metal expose as much surface area as possible to facilitate contact with the halide of silicon and the alkyl halide,

The catalyst selected as recited above is effective in improving the exchange of said R groups from the alkyl halide with said halogen atoms X of said halide of silicon to yield said more highly alkylated silanes. Said catalyst provides the benefits, individually or in combination, of (1) shortened induction time to reach steady-state alkylation conditions; (2) increased conversion of the reactant halides of silicon and alkyl halide; and (3) increased overall incorporation of alkyl groups generated from the reacted alkyl halides into the reacted halides of silicon. As an example, as shown in the examples infra, in the reaction of methyl chloride with a halodisilane in the presence of aluminum, about 50 mole percent of the methyl groups available for exchange are incorporated in the final methyl-containing silicon compounds. Addition of a catalyst, such as tin metal or a tin compound at levels of greater than about 3000 parts per million, based upon the weight of the aluminum, raises methyl incorporation to as high as 100 mole percent at the same conditions of temperature and contact time.

It is known in the art that certain compounds attack aluminum. Examples of these compounds are hydrogen chloride, magnesium chloride, zinc chloride, phosphorous and ferric chloride. It is theorized that catalysts that are effective at increasing alkyl/halogen exchange in the above reaction are those materials that improve contact of the vapors of the reactant alkyl halide and halide of silicon with the halogen-accepting metal by facilitating increased penetration or disruption of a metal oxide film or layer on the

2

surface of the halogen-accepting metal. However, the instant invention is not limited by this theory.

The catalyst is selected from tin metal and tin compounds, antimony and antimony compounds, magnesium and magnesium compounds, mercury and mercury compounds, aluminum bromide, boron, phosphorous, metal phosphorous alloys, metal phosphides, palladium, iodine, iron halides, e.g., iron chloride, hydrogen halides and mixtures thereof. In considering aluminum as the halogen-accepting metal, the catalyst may be, for example, mercury and mercury compounds and mixtures thereof. As stated above, the catalyst is believed to function to improve contact of the vapors of the reactant alkyl halide and halide of silicon with the halogen-accepting metal by facilitating increased penetration or disruption of a metal oxide film or layer on the surface of the halogen-accepting metal. The preferred catalysts are tin and tin compounds. The most preferred catalyst is tin metal.

"A sufficient quantity of catalyst" varies with the particular catalyst. However, most catalysts are effective at concentrations of greater than about 3000 parts per million (ppm) by weight, based upon the weight of the halogen-accepting metal. The inventors project that amounts lower than 3000 ppm are effective as a catalyst. Thus, it is projected that levels of catalysts of 100 ppm or greater are effective in increasing alkyl/halogen exchange. However, these lower amounts of catalyst are susceptible to inactivation and poisoning by impurities within the process. The inventors project that higher levels of catalysts can be utilized, but no additional benefit is anticipated.

The catalyst may be combined with the metal which serves as an halogen acceptor as an heterogeneous mixture of solids. The catalyst may also be combined as an alloy with the halogen accepting metal. The catalyst can be in the physical form, for example, of powders, granules, flakes, chips or pellets.

The more highly alkylated silicon compounds can be, for example, tetramethylsilane, tetraethylsilane, dimethyldiethylsilane, trimethylchlorosilane, triethylfluorosilane, dimethyldichlorosilane, diethyldibromosilane, methyltrichlorosilane, ethyldimethylchlorosilane, ethylmethyldichlorosilane, dimethylvinylchlorosilane, triethylallylsilane, trifluoropropylmethyldichlorosilane, trifluoropropyldimethylchlorosilane, methylphenyldichlorosilane and diphenylmethylchlorosilane, hexamethyldisilane, hexaethyldisilane, 1,1,2-trimethyl-1,2,2-trichlorodisilane,1,1,2,2-tetraethyl-1-methyl-2-bromodisilane or 1-ethyl-1,2,2-trimethyl-1,2-dichlorodisilane.

The halodisilanes which will be enriched in alkyl groups are selected from halodisilanes and organohalodisilanes. These materials are represented by the formula, $R^i_e R_{6-e} Si_2$, wherein $R^i$ and X are defined above and wherein $\underline{e}$ has a value of 0, 1, 2, 3, 4 or 5. Each $R^i$ can be an alkyl group, for example, a hydrocarbon group containing 1 to 10 carbon atoms; a substituted alkyl group, for example, chloromethyl or trifluoropropyl; an alkenyl group, for example, vinyl, allyl or hexenyl; or an aryl or alkaryl group, for example, phenyl, tolyl or benzyl. The halodisilane can be, for example, hexafluorodisilane, hexabromodisilane or hexachlorodisilane. The organohalodisilane can be, for example, 1,1,2,2-tetraethyl-1,2-dibromodisilane or 1,2-dimethyl-1,1,2,2-tetrachlorodisilane. It is understood that the halodisilanes can be a mixture of halodisilanes. It is further understood, that the halodisilanes can be combined in a mixture of other compounds such as silalkylenes and other silicon-containing and organic compounds. An example of such a mixture is the high-boiling residue from crude methylchlorosilanes prepared by the direct reaction of methyl chloride with silicon.

The alkyl halide can be, for example, methyl fluoride, methyl bromide, methyl chloride, ethyl fluoride, ethyl bromide, ethyl chloride or $\underline{n}$-propyl bromide. Methyl chloride and ethyl chloride are preferred alkyl halides.

The molar ratio of the halodisilanes and the alkyl halide fed to the reactor is not critical. The molar ratio can vary depending upon the starting reactants, the desired product and the reaction conditions. Examples of molar ratios that are utilized are illustrated in the examples, infra.

Contacting the halodisilane and the alkyl halide in the presence of a metal which serves as an halogen acceptor can be effected by known means for gas-solid contact. Such contact can be effected by vaporizing the halodisilane and the alkyl halide and feeding these vapors combined or separately to a vessel containing the solid metal and catalyst. The solids can be configured in such contact arrangements as a packed bed, a stirred bed, a vibrating bed or a fluidized bed.

To facilitate reaction of the halodisilane, the alkyl halide and the metal, a vessel should have provisions to control the temperature of the contact zone. For continuous operation, the vessel should include provisions to replenish the halogen-accepting metal as it is converted to a metal halide.

The temperature in the contact zone to effect reaction should be greater than about 150°C. Preferably, the temperature in the contact zone should be in a range from about 150° to 350°C. More preferably, the temperature should be in a range from about 150° to 250°C. Little reaction is projected to take place at temperatures below 150°C. Temperatures in excess of 350°C. are not desirable since the rate of cleavage of organic groups from silicon can be significant at these higher temperatures. Additionally, the rate of decomposition of methyl chloride at higher temperatures is also increased.

Residence time of the gaseous halodisilane and the alkyl halide in contact with the halogen-accepting metal and the catalyst should be greater than about 0.5 seconds. It is preferred that residence time be in a range from about 1 to 15 seconds.

Isolating and separating the more highly alkylated silicon compounds can comprise (D) separating metal halide from gaseous more highly alkylated silicon compounds, unreacted halodisilane and unreacted alkyl halide; and (E) isolating the more highly alkylated silicon compounds from the unreacted halodisilanes and the alkyl halide. The metal halide can be a vapor at the conditions of the reaction. Separating the metal halide from the more highly alkylated silicon compounds and remaining reactants can be effected by such known methods as cooling the vapor stream exiting the contact vessel to a temperature low enough to allow recovery of the metal halide as a solid while passing the product silanes and disilanes and remaining reactants through as a vapor. The metal halides can also remain in the reactor. The vapor stream of gaseous product more highly alkylated silicon compounds and disilanes and remaining reactants can be condensed to a liquid crude product. The more highly alkylated silicon compounds can be isolated in high purity from the remaining reactants by such known methods as distillation.

So that those skilled in the art may better understand and appreciate the instant invention, the following examples are presented. These examples are presented to be illustrative and are not to be construed as limiting the claims as delineated herein.

Example 1

An apparatus was assembled for the alkylation of halodisilanes via the reaction of a halodisilane with an alkyl halide in the presence of aluminum metal.

A carbon steel cylinder approximately 1 inch in diameter by about 10 inches in length was utilized as a reaction tube. The reaction tube was charged with 89.1 g of aluminum. The volume of the reactor filled with aluminum was about 72.4 cc. Reaction temperature was about 250°C. The cylinder was placed in an electrically heated fluidized sand bath to control the temperature of the cylinder and its contents. Feed of reactants to the cylinder were from the top of the cylinder to the bottom. The aluminum solids were held in place by a plug of glass wool.

The aluminum powder was Alcan 44, atomized aluminum powder, purchased from Alcan-Toyo American, Joliet, Illinois.

Methyl chloride (MeCl) was fed as a gas from a compressed gas cylinder. Methyl chloride flow was controlled by a mass flow meter. The halodisilane feed, dimethyltetrachlorodisilane (DMTCDS), began as a liquid feed from a positive displacement pump. The MeCl and DMTCDS feeds were passed through approximately 4 feet of coiled stainless steel tubing in the heated fluidized sand bath.

DMTCDS feed rate was 11.9 g/hr. MeCl feed rate was 8.7 g/hr. Feeds were continued for 396 minutes. The mole ratio of MeCl/DMTCDS was 3.3/1. The residence time, calculated for ambient conditions, for the feed gases was 13.1 seconds.

The vapors exiting the reactor passed through a heated trap, temperature controlled at approximately 155°C., to remove $AlCl_3$ from the vapor stream as a solid. The remaining vapors were passed to a cold trap to recover the unreacted MeCl and the resultant methylchlorosilane mixture. The liquid crude product was then analyzed by gas chromatography (GC).

Table 1 is a summary of the results of this run. The results of crude product GC analysis is represented on a MeCl/DMTCDS-free basis in area percent. The components were tetramethylsilane ($Me_4$), trimethylchlorosilane ($Me_3$), dimethyldichlorosilane ($Me_2$), trimethyltrichlorodisilane ($Me_3Si_2$), tetramethyldichlorodisilane ($Me_4Si_2$), pentamethylchlorodisilane ($Me_5Si_2$) and hexamethyldisilane ($Me_6Si_2$), designated as "$Me_4$", "$Me_3$", "$Me_2$", "Disilanes": "$Me_3$", "$Me_4$", "$Me_5$" and "$Me_6$", respectively, in Table 1. Based upon product recovery, feed composition and product analyses, conversion of starting DMTCDS, conversion of MeCl and percent of MeCl converted that was incorporated in the more highly methylated product chlorosilanes were calculated. These results are reported in Table 1, as "%SiCl Conv", "%MeCl Conv" and "%Me Eff", respectively.

## Table 1

| | | | Disilanes | | | | %SiCl | %MeCl | |
|------|------|------|------|------|------|------|------|------|--------|
| $Me_4$ | $Me_3$ | $Me_2$ | $Me_3$ | $Me_4$ | $Me_5$ | $Me_6$ | Conv | Conv | %Me Eff |
| 0.8 | 59.8 | 25.0 | 1.0 | 5.0 | 1.5 | 0.3 | 70.1 | 51.4 | 51.5 |

The above results demonstrate that methylchlorodisilanes react with methyl chloride in the presence of aluminum to produce not only more highly methylated disilanes but also a significant proportion of methylchlorosilanes.

## Example 2

A run was made using materials, apparatus and procedures similar to those used in Example 1. In this run, however, tin metal was added as a catalyst for the methylation reaction.

The reactor was charged with 99.5 g of aluminum. The volume of the reactor filled with aluminum was 72.4 cc. Contact zone temperature was 250°C. The DMTCDS feed rate was 11.3 g/hr. Mecl feed rate was 8.8 g/hr. Feeds were continued for a period of 180 minutes. The mole ratio of MeCl/DMTCDS was 3.54/1. The residence time, calculated for ambient conditions, for the feed gases was about 13.2 seconds.

The aluminum used was Alcan 44 aluminum powder. The catalyst was tin metal. The tin was added to the aluminum powder so that the tin content of the solids was about 3925 ppm by weight.

Samples were taken of the total reactor effluent at the end of the run. Table 2 is a summary of the results of the run. The notation of Example 1 is utilized in Table 2.

### Table 2

| | | | Disilanes | | | | %SiCl Conv | %MeCl Conv | %Me Eff |
|---|---|---|---|---|---|---|---|---|---|
| $Me_4$ | $Me_3$ | $Me_2$ | $Me_3$ | $Me_4$ | $Me_5$ | $Me_6$ | | | |
| 57.3 | 6.3 | 0 | 0 | 0 | 0 | 33.9 | 100 | 80.3 | 100 |

The above results demonstrate that tin is a catalyst that will increase the degree of methylation of both product organosilanes and organodisilanes.

## Claims

1. A process for preparing more highly alkylated silicon compounds having the formula, $R_aR^i_bSiX_{(4-a-b)}$ or $R_fR^i_gSi_2X_{(6-f-g)}$, wherein each R is independently selected from a group consisting of methyl, ethyl and n-propyl; each $R^i$ is independently selected from a group consisting of hydrogen atoms, alkyl, substituted alkyl, alkenyl, aryl and alkaryl groups; a has a value of 1, 2, 3 or 4, b has a value of 0, 1, 2 or 3 and the sum of a + b is 4 or less; f has a value of 1, 2, 3, 4, 5 or 6, g has a value of 0, 1, 2, 3, 4 or 5 and the sum of f + g is 6 or less; and X is an independently selected halogen atom, said process comprising:

   (A) contacting an halodisilane having the formula $R^i_eX_{6-e}Si_2$ or a mixture thereof, wherein $R^i$ and X are defined above; and e has a value of 0, 1, 2, 3, 4 or 5, with an alkyl halide having the formula, RX, wherein R and X are defined above, in the presence of a metal which serves as an halogen acceptor;

   (B) reacting the halodisilane or mixture thereof with the alkyl halide in the presence of the metal at a temperature greater than about 150°C to form the more highly alkylated silicon compound and a halide of the metal; and

   (C) isolated and separating the more highly alkylated silane,

   wherein the metal which serves as an halogen acceptor is selected from the group consisting of aluminum and zinc, and

   wherein said steps (A) and (B) are carried out in the presence of a catalyst selected from the group consisting of tin and tin compounds, antimony and antimony compounds, magnesium and magnesium compounds, mercury and mercury compounds, aluminum bromide, iron halides, boron, phosphorous, metal phosphorous alloys, metal phosphides, palladium iodine, hydrogen halides and mixtures thereof.

2. A process according to Claim 1, wherein the halogen acceptor is aluminium.

3. A process according to Claim 1 or Claim 2, wherein the catalyst is selected from tin metal and tin compounds.

4. A process according to any of Claims 1 to 3, wherein the alkyl halide reactant is methyl chloride.

5. A process according to any of Claims 1-4, wherein the halodisilane reactant is the high boiling residue from crude methylchlorosilanes prepared by the direct reaction of methyl chloride with silicone.

**Patentansprüche**

1. Verfahren zur Herstellung höheralkylierter Siliziumverbindungen der Formeln $R_aR^i_bSiX_{(4-a-b)}$ oder $R_fR^i_gSi_2X_{(6-f-g)}$, in denen jeder Substituent R unabhangig ausgewählt ist aus einer Gruppe, bestehend aus Methyl-, Ethyl- und n-Propylresten; jeder Substituent $R^i$ unabhängig ausgewählt ist aus einer Gruppe, bestehend aus Wasserstoffatomen, Alkyl-, substituierten Alkyl-, Alkenyl-, Aryl- und Alkaryl-Resten; $\underline{a}$ einen Wert von 1, 2, 3 oder 4 hat, $\underline{b}$ einen Wert von 0, 1, 2 oder 3 hat und die Summe von $\underline{a}$ + $\underline{b}$ gleich oder weniger als 4 beträgt; $\underline{f}$ einen Wert von 1, 2, 3, 4, 5 oder 6 hat, $\underline{g}$ einen Wert von 0, 1, 2, 3, 4 oder 5 hat und die Summen von $\underline{f}$ + $\underline{g}$ gleich oder weniger als 6 beträgt; und X ein unabhängig ausgewähltes Halogenatom bezeichnet; wobei man in diesem Verfahren

(A) ein Halogendisilan der Formel $R^i_eX_{6-e}Si_2$ oder ein Gemisch solcher Disilane, wobei $R^i$ und X die zuvor angegebene Bedeutung haben, und $\underline{e}$ einen Wert von 0, 1, 2, 3, 4 oder 5 hat; mit einem Alkylhalogenid der Formel RX, in der R und X die zuvor angegebene Bedeutung haben; in Gegenwart eines als Halogenakzeptor dienenden Metalls in Berührung bringt;

(B) das Halogendisilan oder das Gemisch von Halogendisilanen mit dem Alkylhalogenid in Gegenwart des Metalls bei einer Temperatur von höher als etwa 150°C zu der höheralkylierten Siliziumverbindung und einem Halogenid des Metalls umsetzt; und

(C) das höheralkylierte Silan isoliert und abtrennt,

wobei das als Halogenakzeptor dienende Metall ausgewählt ist aus der Gruppe, bestehend aus Aluminium und Zink, und wobei die Reaktionsschritte (A) und (B) in Gegenwart eines Katalysators ausgeführt werden, der ausgewählt ist aus der Gruppe, bestehend aus Zinn- und Zinnverbindungen, Antimon und Antimonverbindungen, Magnesium und Magnesiumverbindungen, Quecksilber und Quecksilberverbindungen, Aluminiumbromid, Eisenhalogeniden, Bor, Phosphor, Metall-Phosphor-Legierungen, Metallphosphiden, Palladiumjod, Halogenwasserstoffen und Gemischen dieser Stoffe.

2. Verfahren nach Anspruch 1, wobei der Halogenakzeptor Aluminium ist.

3. Verfahren nach Anspruch 1 oder 2, wobei der Katalysator ausgewählt ist aus Zinnmetall und Zinnverbindungen.

4. Verfahren nach jedem der Ansprüche 1 bis 3, wobei das als Ausgangsstoff dienende Alkylhalogenid Methylchlorid ist.

5. Verfahren nach jedem der Ansprüche 1 bis 4, wobei das als Ausgangsstoff dienende Halogendisilan der hochsiedende Rückstand von rohen Methylchlorsilanen ist, die durch direkte Reaktion von Methylchlorid mit Silizium hergestellt wurden.

**Revendications**

1. Un procédé pour préparer des composés siliciés plus fortement alkylés ayant la formule $R_aR^i_bSiX_{(4-a-b)}$ ou $R_fR^i_gSi_2X_{(6-f-g)}$, dans laquelle chaque R est indépendamment choisi dans un groupe composé des radicaux méthyle, éthyle et $\underline{n}$-propyle ; chaque $R^i$ est indépendamment choisi dans un groupe composé d'atomes d'hydrogène, et des groupes alkyles, alkyles substitués, alcényles, aryles et alcaryles; $\underline{a}$ a une valeur de 1, 2, 3 ou 4 ; $\underline{b}$ a une valeur de 0, 1, 2 ou 3 et le somme de $\underline{a}$ + $\underline{b}$ est égale ou inférieure à 4 ; $\underline{f}$ a une valeur de 1, 2, 3, 4, 5 ou 6 ; $\underline{g}$ a une valeur de 0, 1, 2, 3, 4 ou 5 et la somme de $\underline{f}$ + $\underline{g}$ est égale ou inférieure à 6 ; et X est un atome d'halogène indépendamment choisi, ledit procédé comprenant:

(A) la mise en contact d'un halogénodisilane ayant la formule $R^i_eX_{6-e}Si_2$ ou d'un mélange de ceux-ci dans lequel $R^i$ et X sont définis ci-dessus ; et $\underline{e}$ a une valeur de 0, 1, 2, 3, 4 ou 5, avec un halogénure d'alkyle ayant la formule RX dans laquelle R et X sont définis ci-dessus, en présence d'un métal servant d'accepteur d'halogène ;

(B) la réaction de l'halogénodisilane ou d'un mélange de ceux-ci avec l'halogénure d'alkyle en présence du métal à une température supérieure à environ 150°C pour former le composé silicié plus fortement alkylé et un halogénure du métal ; et

6

(C) l'isolation et la séparation du silane plus fortement alkylé,

dans lequel le métal servant d'accepteur d'halogène est choisi dans le groupe composé de l'aluminium et du zinc, et

dans lequel lesdites étapes (A) et (B) sont réalisées en présence d'un catalyseur choisi dans le groupe composé de l'étain et des composés d'étain, de l'antimoine et des composés d'antimoine, du magnésium et des composés du magnésium, du mercure et des composés du mercure, du bromure d'aluminium, des halogénures de fer, du bore, du phosphore, des alliages phosphore métal, des phosphures métalliques, de l'iodure de palladium, des halogénures d'hydrogène et des mélanges de ceux-ci.

2. Un procédé selon la revendication 1 dans lequel l'accepteur d'halogène est l'aluminium.

3. Un procédé selon la revendication 1 ou la revendication 2 dans lequel le catalyseur est choisi parmi le métal étain et les composés d'étain.

4. Un procédé selon l'une quelconque des revendications 1 à 3 dans lequel le réactif halogénure d'alkyle est du chlorure de méthyle.

5. Un procédé selon l'une quelconque des revendications 1 à 4 dans lequel le réactif halogénodisilane est le résidu à point d'ébullition élevé de méthylchlorosilanes bruts préparés par la réaction directe du chlorure de méthyle avec du silicium.